# EUROPEAN PATENT SPECIFICATION

(11) **EP 0 621 151 B1**
(45) Date of publication and mention of the grant of the patent: **25.09.1996**
(21) Application number: 94830172.6
(22) Date of filing: 13.04.1994
(51) Int. Cl.: B60J 5/06

(54) **Guide for motor vehicle tarpaulin**
Führung für Fahrzeugplane
Guide pour bâche latérale de véhicule

(30) Priority: 16.04.1993 IT MI930756
(43) Date of publication of application: 26.10.1994
(73) Proprietor: Dona', Severino, Caleppio di Settala (Milano) (IT)
(72) Inventor: Dona', Severino, Caleppio di Settala (Milano) (IT)
(74) Representative: Pizzoli, Pasquale Vincenzo

(56) References cited:
- FR-A- 2 595 304
- GB-A- 2 071 582
- GB-A- 2 168 011

## Description

The present invention concerns tarpaulin supporting structures for motor vehicles and in particular a guide-support for tarpaulins which can be used to obtain both fixed and mobile roofs.

It is known that truck tarpaulins are secured on horizontal crossbars which form the roof frame and may be either of the fixed type or of the type sliding in the longitudinal direction of the body. Prior art structures used to obtain fixed roofs are different from those used for mobile roofs. They usually have an upper portion with a square or rectangular cross-section, and a lower portion provided with one or two C-shaped rails facing downwards which act as a support for carriages carrying the tarpaulin on the body side and possible internal posts.

For example, GB-A-2168011 discloses a guide-support for a motor vehicle tarpaulin including an upper portion and a lower portion, said lower portion consisting of one rail for carriages. The upper portion of this guide-support is made up of two sections welded together and forming a structure which is therefore weaker and more difficult to manufacture than a box-like structure made of a single section. In GB-A-2071582 is disclosed a guide-support whose lower portion consists of two coupled rails for carriages, according to the preamble of claim 1. However, said coupled rails are manufactured separately and welded together along their central web, which thus becomes the only portion of the double-rail structure having double thickness.

There are apparent drawbacks of practical and economical nature deriving from the use of two different types of supporting members for the two types of roof, as well as from the need of a working to obtain a lower double rail.

Therefore, the object of the present invention is to overcome the above-described drawbacks by providing a guide-support capable of carrying out the double function of support for the crossbars of fixed roofs, or of guide for those of mobile roofs, and which is also provided with a stronger lower double rail obtained from a single piece, thereby not requiring further working.

This object is achieved by means of a guide-support having the characteristics cited in claim 1.

The main advantage of said guide-support is, therefore, that of being universally usable for both types of roof, as well as that of allowing to realize a partially fixed and partially mobile roof.

A further advantage of the guide-support according to the present invention stems from the greater strength of the lower double rail made from a single piece.

These and other advantages and characteristics of the device according to the present invention will be apparent to those skilled in the art from the following detailed description of an embodiment thereof referring to the annexed drawings wherein:
Fig. 1 is a cross-sectional view of the guide-support according to the present invention used for a fixed roof;
Fig.2 is a cross-sectional view of the same guide-support used for a mobile roof; and
Fig.3 is a cross-sectional view of a variation of the guide-support of fig.2.

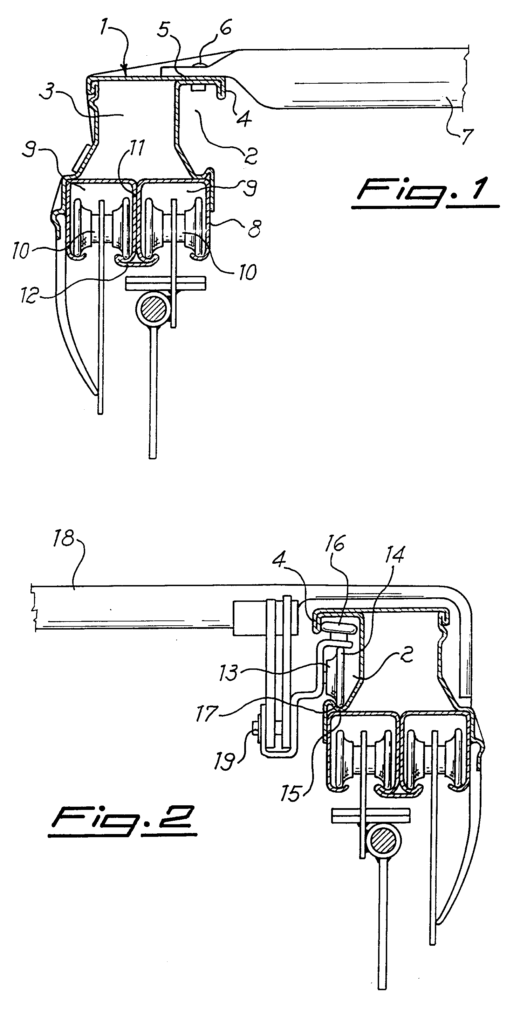

Referring to fig.1, there is seen that the guide-support according to the present invention essentially consists of an upper section 1 bent so as to form a substantially C-shaped channel 2 facing the vehicle center-line, while portion 3 facing outwards has an almost rectangular section. The upper portion of channel 2 includes a substantially vertical segment of wall 4, whose function will be made clear later on, and an almost horizontal segment 5 provided with holes through which anchor bolts 6 for crossbars 7 pass to achieve a fixed roof.

The guide-support lower portion consists, in turn, of a lower section 8 obtained from a single piece bent to form two substantially C-shaped rails 9 facing downwards, wherein carriages 10 slide. The central web 11 is obtained by bending the sheet and therefore has a double thickness in the lower central portion 12 too. While in the simple welding of two single rails along central web 11 only the latter has a double thickness, in the present guide-support the bending of a single piece of sheet allows to obtain the double thickness not only on web 11 but also on the lower central portion 12 of rails 9. The two carriages 10 abut centrally on this connection area between the two rails 9 side by side, and here the stresses due to their sliding concentrate, so that the double thickness assures that the U-shaped tracks wherein the central wheels of carriages 10 run will not cave in due to the continuous use. The two upper 1 and lower 8 sections are joined together, preferably by welding, on the upper and lateral faces at the outer upper corners of rails 9.

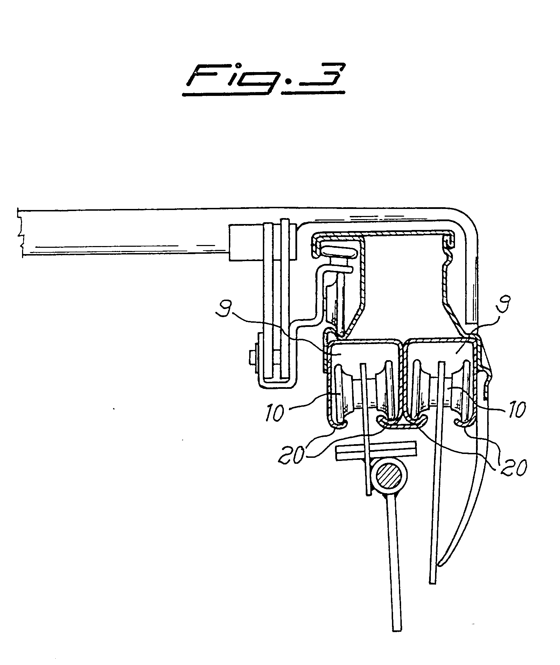

Referring now to fig.2, there is seen that the same guide-support, above described and illustrated in fig.1, can house a carriage 13 in channel 2. Said carriage 13 includes a horizontal axis wheel 14 abutting in the lower area 15 of channel 2, and an upper wheel 16 having a substantially vertical axis. This carriage 13 is retained within channel 2 by the segment of wall 4, at the top, and by a lip 17, at the bottom, which defines towards the vehicle center-line the area 15 wherein wheel 14 abuts. The mobile crossbar 18 is pivoted to carriage 13 through a pin 19, and it is moved by sliding longitudinally carriage 13 within channel 2.

Fig.3 shows a variation of the invention embodiment which is different from the above-described one only for the mutual position of tracks 20 wherein the rollers of carriages 10 slide. In fact, while tracks 20 are all at the same level in the embodiment described in figs.1 and 2, in said variation the central tracks positioned at a higher level with respect to the outer tracks. Through this structural arrangement, the outer carriage on which the tarpaulin is mounted results inclined inwards, and thanks to said inclination the tarpaulin support load is sustained mainly by the stronger portion of rails 9, i.e. by the double thickness central tracks.

Therefore, the main object of the present invention of being able to use a single type of supporting guide both for fixed crossbars and for mobile crossbars mounted on sliding carriages is fully achieved, as well as is the further object of having a pair of lower rails which are stronger and obtained with a welding operation less.

It is clear that the shape of channel 2 may undergo changes in order to adapt to other carriages having a shape different from that of carriage 13 illustrated in fig.2, holding good that the upper portion of the guide-support according to the present invention consists of a single piece of sheet bent so as to form a channel facing the vehicle center-line and a box-like load-bearing structure facing outwards.

## Claims

1. A guide-support for motor vehicle tarpaulin including an upper portion fixed onto a lower portion, said lower portion consisting of one or two supporting rails (9) for carriages (10), characterized in that the upper portion is made up of a single section (1) bent so as to form a substantially C-shaped channel (2) whose open side faces the vehicle center-line and a box-like structure (3) facing outwards, said channel (2) being provided at the top with a substantially horizontal segment of wall (5) having holes for the passage of bolts (6) for mounting fixed crossbars (7).

2. A guide-support according to claim 1, characterized in that the lower portion consists of a single section (8) bent so as to form two side by side rails (9) each one provided with two tracks (20), a central one and an outer one, for the sliding of carriages (10), said section (8) having a double thickness on the central web (11) and on the lower central portion (12) which connects said rails (9) and forms the central tracks (20).

3. A guide-support according to claim 2, characterized in that the central tracks (20) of the two rails (9) are positioned at a higher level with respect to the outer tracks (20).

## Patentansprüche

1. Führungsträger für eine Fahrzeugplane, umfassend einen oberen Teil, der auf einem unteren Teil befestigt ist, wobei der untere Teil aus einer oder zwei Trägerschienen (9) für Laufrollen (10) besteht, dadurch gekennzeichnet, daß der obere Teil aus einem einzigen Abschnitt (1) aufgebaut ist, der so gebogen ist, daß er einen im wesentlichen C-förmigen Kanal (2) bildet, dessen offene Seite der Fahrzeugmittellinie zugewandt ist, und aus einem nach außen gewandten kastenähnlichen Gefüge (3) aufgebaut ist, wobei der Kanal (2) an der Oberseite mit einem im wesentlichen horizontalen Wandabschnitt (5) versehen ist, der Löcher zum Durchführen von Bolzen (6) zur Montage fester Querstangen (7) aufweist.

2. Führungsträger nach Anspruch 1, dadurch gekennzeichnet, daß der untere Teil aus einem einzigen Abschnitt (8) besteht, der so gebogen ist, daß er zwei nebeneinander liegende Schienen (9) bildet, die zum Gleiten von Laufrollen (10) jeweils mit zwei Spuren (20), nämlich einer mittleren und einer äußeren Spur versehen sind, wobei der Abschnitt (8) am mittleren Steg (11) und an dem unteren mittleren Abschnitt (12), der die Schienen (9) verbindet und die mittleren Spuren (20) bildet, eine doppelte Dicke aufweist.

3. Führungsträger nach Anspruch 2, dadurch gekennzeichnet, daß die mittleren Spuren (20) der beiden Schienen (9) in einem höheren Niveau als die Außenspuren (20) angeordnet sind.

## Revendications

1. Guide pour bâche latérale de véhicule comprenant une portion supérieure fixée sur une porton inférieure, ladite porton inférieure étant constituée par l'un de deux ras de support (9) pour des chariots (10), caractérise en ce que la portion supérieure est réalisée par une section unique (1) pliée de manière à constituer un canal sensiblement en forme de C (2)dont la paroi ouverte fait face à l'axe longitudinal du véhicule et une structure (3) analogue à une boîte faisant face vers l'extéreur, ce canal étant muni à sa partie supérieure d'un segment de paroi (5) sensiblement horizontal présentant des trous pour le passage de boulons (6) pour le montage de traverses fixes (7).

2. Guide selon la revendication 1, caractérisé en ce que la portion inférieure est constituée par une section unique (8) pliée de manière à former deux rails (9) côte à côte munis chacun de deux pistes (20), l'une centrale et l'autre extérieure, pour le coulissement des chariots (10), cette section (8) ayant une épaisseur double sur l'âme centrale (11) et sur la portion centrale inférieure (12) qui relie les rails (9) et forme les pistes (20) centrales.

3. Guide selon la revendication 2, caractérisé en ce que les pistes (20) centrales sont situées à un niveau plus élevé que les pistes (20) extérieures.
